# EUROPÄISCHE PATENTSCHRIFT

(11) **EP 1 004 556 B1**
(45) Veröffentlichungstag und Bekanntmachung des Hinweises auf die Patenterteilung: **13.06.2001**
(21) Anmeldenummer: 99117564.7
(22) Anmeldetag: 06.09.1999
(51) Int. Cl.: C04B 28/04

(54) **Hydraulische Bindemittelzusammensetzung sowie deren Verwendung**
Hydraulic binder composition and its use
Composition de liant hydraulique et son utilisation

(30) Priorität: 25.11.1998 DE 19854476
(43) Veröffentlichungstag der Anmeldung: 31.05.2000
(73) Patentinhaber: DYCKERHOFF AKTIENGESELLSCHAFT, D-65203 Wiesbaden (DE)
(72) Erfinder: Mitkova, Darina, Dr., 55276 Oppenheim (DE)
(74) Vertreter: Patentanwälte Dr. Solf & Zapf

(56) Entgegenhaltungen:
- DE-A- 3 833 932
- DE-A- 19 653 524
- FR-A- 2 274 574
- CHEMICAL ABSTRACTS, vol. 112, no. 20, 14. Mai 1990 (1990-05-14) Columbus, Ohio, US; abstract no. 184837p, M. NEJEACHLEB, ET AL.: Seite 351; XP000151665 & CS 260 577 A (ID.)

## Beschreibung

Die Erfindung betrifft eine hydraulische Bindemittelzusammensetzung für Spezialanwendungen mit Zusatzmitteln zum Einstellen der Verarbeitbarkeit, des Erstarrens, der Frühfestigkeit und der Endfestigkeit sowie der Dauerhaftigkeit der Endfestigkeit.

Mit einer derartigen Bindemittelzusammensetzung befaßt sich die EP 0 517 869 B1. Sie beschreibt anhand des Standes der Technik die Probleme, mit denen sich auch die vorliegende Erfindung befaßt. Demgemäß ist Ziel der vorliegenden Erfindung, hydraulische Bindemittelzusammensetzungen insbesondere mit hohen Frühfestigkeiten zu entwickeln, die z.B. für Spritzbeton oder Straßenfließbeton oder Trockenmörtel für Betonarbeiten geeignet und bei der Erstellung schnell tragfähiger Beläge oder industriell vorgefertigte Formen verwendbar sind.

In der EP 0 517 869 B1 wird ein hydraulisches Bindemittel beansprucht zur Herstellung von Beton mit hoher Früh- und Langzeitfestigkeit basierend auf Portlandzement mit Calciumsulfatphasen und Zusatzmitteln zum Einstellen von Verarbeitbarkeit, Abbinde- bzw. Erstarrungsbeginn, Früh- und/oder Langzeitfestigkeit, wobei die Zusatzmittel zur Erhöhung der Festigkeit mindestens einen Carbonatdonor und mindestens eine eisenkomplexierende Verbindung enthalten und wobei der Portlandzement einen definierten maximalen Calciumsulfathalbhydratgehalt von weniger als 50 Gew.-% des gesamten Calciumsulfatgehaltes im Portlandzement, gerechnet als Dihydrat, aufweist.

Es hat sich gezeigt, daß es äußerst schwierig und in manchen Fällen sogar unmöglich ist, den Calciumsulfathalbhydratgehalt in Kombination mit den eisenkomplexierenden Verbindungen mengenmäßig derart einzustellen, daß die gewünschten Eigenschaften der Bindemittelzusammensetzung erzielt werden. Demgemäß haben sich die in diesem Stand der Technik beanspruchten Bindemittel auf dem Markt nicht durchsetzen können.

Es sind zudem gipsfreie Zementzusammensetzungen bekannt. Beispielsweise werden gipsfreie Portlandzement-Zusammensetzungen für schnell härtende Zemente in der DE-OS 25 26 482 beschrieben, die z.B. Ligninsulfonate als Verzögerer in Kombination mit einem Erhärtungs- bzw. Hydratationsbeschleuniger in Form eines sauren Salzes, z.B. in Form von Bicarbonat, Bisulfat oder Bisulfit von Natrium, Kalium oder Ammonium aufweisen. Das Ligninsulfonat soll verzögernd wirken und eine plastifizierende Eigenschaft erbringen. Die Feinheit des Zements wird mit 3000 bis 7000 cm²/g (Blaine) angegeben.

In der DE 33 07 307 A1 werden gipsfreie Zementzusammensetzungen mit steuerbaren Abbindeeigenschaften angegeben, die durch einen Gehalt an mit 1 bis 10 Gew.-% Kalkstein vermahlenem Portlandzementklinker mit einer spezifischen wirksamen Oberfläche von 3000 bis 7000 cm²/g und 0,005 bis 1 Gew.-%, bezogen auf das Gewicht des Klinkers, eines wasserlöslichen Aminsalzes, das durch Umsetzung eines Amins mit Ameisen- oder Essigsäure hergestellt worden ist, gekennzeichnet sind.

Die DE 38 33 932 A1 gibt gipssteinfreie Zementgemische an, die Portlandzementklinker einer spezifischen Oberfläche von 2200 bis 7000 cm²/g sowie einen Mahlzusatz, eine alkalische Verbindung aus der Gruppe der Carbonate, Hydrogencarbonate oder Silikate und einen sulfonierten Elektrolyt aus der Gruppe der Ligninsulfonate eines sulfonierten Polyphenolats oder eines sulfonierten Lignins enthalten.

Die bekannten gipsfreien Zementzusammensetzungen, die sulfonatgruppenhaltige Verzögerer wie Ligninsulfonat oder dergleichen und Erhärtungsbeschleuniger wie Kaliumcarbonat oder dergleichen enthalten, weisen die Neigung auf, eine klebrig gummiartige Struktur bzw. Konsistenz anzunehmen (Zeitschrift Zement-Kalk-Gips-Nr. 6/1977, Seite 293 bis 295), weshalb deren Verwendung in der Praxis nicht durchsetzbar ist.

Aus der Betontechnologie ist ferner bekannt, sogenannte Hochleistungsverflüssiger anstelle an sich bekannter anderer Verflüssiger wie Ligninsulfonaten, Naphthalinsulfonaten, Formaldehydkondensaten und/oder Melaminsulfonaten bei Verwendung gipshaltiger bzw. mit Gips verzögerter Bindemittel zu verwenden (ConChem-Journal 5. Jahrgang 4/97, Seite 146 bis 148), die trotz niedriger Dosierung die Herstellung von Betonen mit sehr geringen Wasser-Zement-Werten (W-Z-Wert < 0,4) und sehr hohem Ausbreitmaß (über 60 cm) ermöglichen. Diese Verflüssiger basieren auf modifizierten Polycarboxylaten; sie bewirken eine sehr hohe Wasserreduktion ohne eine Verzögerung der Festigkeitsentwicklung.

Versuche mit gipsfreien Bindemitteln haben ergeben, daß sulfonatgruppenhaltige plastifizierende Verzögerer wie Ligninsulfonate bei Anwesenheit üblicher Erstarrungsbeschleuniger in engen Grenzen wirksam sind, daß aber eine Steuerung des Fließverhaltens, des Beginns des Erstarrens, der Höhe der Frühfestigkeit und der Endfestigkeit sowie der Dauerhaftigkeit der Endfestigkeit nicht unabhängig voneinander möglich ist. Wird der Ligninsulfonatanteil für eine Plastifizierung über die Menge erhöht, die zum Verzögern ausreichend ist, wird zwar eine Art Plastifizierung erwirkt, es werden aber das Abbinden bzw. Erstarren und/oder die Frühfestigkeit und/oder die Endfestigkeit beeinträchtigt, so daß ein Steuern bzw. eine gezielte Einstellung dieser Eigenschaften durch Verwendung unterschiedlicher Mengenverhältnisse nicht möglich ist. Außerdem ergibt sich nach Überschreiten bestimmter Mengen die oben erwähnte klebrig gummiartige Konsistenz mit erheblicher Beeinträchtigung der Festigkeitsentwicklung und der Festigkeitsendwerte.

Aufgabe der Erfindung ist, eine hydraulische Bindemittelzusammensetzung zu schaffen, die keine Beeinträchtigung des Fließverhaltens des Frischbetons oder Frischmörtels ergibt und die bezüglich Verarbeitbarkeit, des Beginns des Erstarrens, der Höhe der Frühfestigkeit, der Höhe der Endfestigkeit und Dauerhaftigkeit der Endfestigkeit auf einfache Weise z.B. werkseitig auf die jeweils gestellte Anforderung genau vorbereitet eingestellt werden kann.

Diese Aufgabe wird durch die Merkmale des Anspruchs 1 gelöst. Vorteilhafte Weiterbildungen der Erfindung werden in den Unteransprüchen gekennzeichnet.

Die erfindungsgemäße Bindemittelzusammensetzung ist sulfatträgerfrei, insbesondere frei von Calciumsulfatdihydrat, -halbhydrat und Anhydrit (gipsfrei) und weist zwingend ausgewählte Zusatzmittel auf, die eine kombinatorische Wirkung ergeben.

Es ist überraschend, daß die Verwendung der Polycarboxylate zusammen mit an sich bekannten sulfonatgruppenhaltigen Verzögerern, die gleichzeitig auch als Verflüssiger wirken, in Kombination mit an sich bekannten Beschleunigern die Wirkung erbringt, daß die sulfonatgruppenhaltigen Mittel lediglich bezüglich der Verzögerung wirksam sind und die verflüssigende Wirkung der Polycarboxylate nicht beeinflussen. Die sulfonathaltigen Verflüssiger können ohne Beachtung sehr genauer Grenzwerte zugegeben werden, weil es ausreicht, zumindest die Menge zuzugeben, die für eine vorbestimmte Bindemittelmenge zum Verzögern erforderlich ist. Größere Mengen stören weder den Verzögerungsprozeß noch die verflüssigende Wirkung der Polycarboxylate.

Überraschend ist ferner, daß die Verwendung der genannten Zusatzmittelkombination nicht nur das sehr genaue Steuern der oben genannten Eigenschaften ermöglicht, sondern daß auch ungewöhnlich hohe Frühfestigkeiten und dauerhafte höhere Endfestigkeiten erzielbar sind. Eine die Verwendung störende klebrig gummiartige Konsistenz bildet sich trotz Anwesenheit sulfonatgruppenhaltiger Verzögerer und üblicher Beschleuniger in überraschender Weise nicht mehr aus.

Ein weiterer Parameter zum Steuern der oben genannten Eigenschaften ist die Feinheit des gipsfreien hydraulischen Bindemittels, das z.B. in Form eines Klinkermehls, insbesondere Portlandzementklinkermehls, verwendet wird.

Nach der Erfindung werden ohne Sulfatträgerzusatz oder sulfonatgruppenhaltige Zusatzmittel gemahlene hydraulische Bindemittel, z.B. Portlandzementklinkermehl oder Portlandzementklinkermehl plus Hüttensandmehl bzw. hydraulische Bindemittel, die sulfatträgerfrei sind oder keine sulfonatgruppenhaltige Zusatzmittel enthalten, mit der erfindungsgemäßen Zusatzmittelkombination vermengt. Dabei werden nach einer weiteren Ausführungsform der Erfindung, insbesondere im Falle der Verwendung von Zementklinkermehlen, beim Mahlen Kornfraktionen und/oder Kornverteilungen mit geeigneten Aggregaten, z.B. mit Sichtern, separiert und getrennt vorgehalten. Die Mischung bestimmter Kornfraktionen und/ oder Kornverteilungen mit den erfindungsgemäß zu kombinierenden Zusatzmitteln erfolgt dann nach Maßgabe der Anforderungen der Baustellen. Gewünschte Eigenschaftsentwicklungen bezüglich der oben genannten Eigenschaften störende Kornfraktionen, die handelsübliche hydraulische Bindemittel meist aufweisen, oder die gewünschten Eigenschaften fördernde Kornbänder bzw. Kornfraktionen können auf diese Weise ferngehalten bzw. selektiv eingesetzt werden.

Zudem ist es möglich, auch feinstgemahlene Kornfraktionen und/ oder Kornbänder zu verwenden, die zu besonders hohen Festigkeiten führen und außerdem auch eine zusätzliche Steuerung der oben genannten guten Eigenschaften besonders effektiv ermöglichen.

Selbstverständlich liegt es im Rahmen der Erfindung, weitere Zusatzmittel, die die Steuerung der oben genannten Eigenschaften nicht beeinträchtigen und anderen Eigenschaftsbeinflussungen dienen, beispielsweise Mahlhilfsmittel, zu verwenden.

Erfindungsgemäß werden die gebräuchlichen plastifizierenden sulfonatgruppenhaltigen Erstarrungsverzögerer als Zusatzmittel verwendet. Dies sind beispielsweise Ligninsulfonate, Sulfonseifen, Sulfonsäuren, Alkylbenzolsulfonate, Naphthalinsulfonate und sulfonierte Melaminformaldehydkondensate. Diese können aber auch insbesondere teilweise durch andere sulfonatgruppenfreie Verzögerer ersetzt werden. Zum Beispiel sind teilweise verwendbar: Celluloseether (Methyl-, Ethyl- und/oder Propylether), Mono- und/oder Polysaccharide (Fructose, Glucose), Acrylsäuren und deren Salze, Oxycarbonsäuren und deren Salze (z.B. Zitronensäure), Phosphorsäuren und deren Salze, Borsäure und deren Salze, Alkylamide, Styrol-Butadien.

Als Beschleuniger werden insbesondere verwendet Alkalicarbonate und/oder Alkalibicarbonate. Des weiteren sind beispielsweise verwendbar Calciumnitrate, Alkalisilikate, Alkalihydroxyde, Erdalkalihydroxyde, Chloride mehrwertiger Kationen, Alkalisulfate, Alkalipyrosulfite, Aminverbindungen, Calciumformiate.

Als sulfonatgruppenfreies Fließmittel werden Polycarboxylate, insbesondere modifizierte Polycarboxylate, die beispielsweise in der DE 196 53 524 A1 beschrieben werden, verwendet. Es handelt sich meist um Homo- oder Copolymere carboxylgruppenhaltiger Monomerer, deren Seitenketten modifiziert sind (ConChem-Journal, 5. Jahrgang 4/97, S. 147). Des weiteren ist es möglich, auch andere bekannte sulfonatgruppenfreie Fließmittel gegebenenfalls anstelle der Polycarboxylate, insbesondere aber in Kombination damit zu verwenden. Beispielsweise sind dies Zusatzmittel aus der Gruppe der Polyacrylate oder Polyasparaginsäuren; letztere können jedoch auch zu den Polycarboxylaten gerechnet werden.

Die weitergehende Steuerung der oben genannten Eigenschaften durch bestimmte Kornfraktionen und/oder Kornbänder kann z.B. mit folgenden Klinkermehlfraktionen aus ausgesichteten Feinstmehlen erfolgen:
d₉₅ ≤ 6,5 µm
d₉₅ ≤ 9 µm
d₉₅ ≤ 16 µm
d₉₅ ≤ 24 µm oder
beiliebige Mischungen selektiver Feinstmehle.

Durch die Verwendung der Feinstmehlfraktionen kann außerdem Zusatzmittel eingespart oder die Verarbeitbarkeit, die Frühfestigkeit und/oder die Endfestigkeit gesteuert, z.B. gesteigert werden. Durch eine Verwendung bestimmter Kornfraktionen oder Kornbänder können auch in anderen hydraulischen Bindemittelzusammensetzungen Zusatzmittel eingespart und bei bestimmter Zusatzmittelmenge und -art die Verarbeitbarkeit, die Frühfestigkeit und/oder die Endfestigkeit gesteuert werden.

Der Verflüssiger (Fließmittel) kann werksseitig in einer Werktrockenmischung zugesetzt in der Bindemittelmischung enthalten sein oder unmittelbar in die Bindemittel-, Frischbeton- oder Frischmörtelzubereitung im Beton- oder Mörtelmischwerk gegeben oder auf der Baustelle nachdosiert werden.

Anhand der folgenden Beispiele wird die Erfindung näher erläutert.

### Beispiel 1:

Es wurden Betone aus folgenden gipsfreien Bindemittelzusammensetzungen hergestellt:
97,98 M% sulfatträgerfreies Portlandzementklinkermehl (Feinheit 0 - 24 µm)
0,52 M% sulfonatgruppenhaltiger Erstarrungsverzögerer in Form von Ligninsulfonat
1,50 M% Erhärtungsbeschleuniger in Form von Natriumcarbonat.

Von dieser Bindemittelzusammensetzung wurden 450 kg/m³ Beton verwendet und mit 1 838 kg/m³ Zuschlagstoff mit einer Sieblinie AB16 und mit Wasser zu Frischbeton vermischt. Die erste Mischung enthielt kein zusätzliches Fließmittel; die zweite Mischung enthielt 2 M% eines sulfonatgruppenhaltigen Fließmittels; die dritte Mischung enthielt 2 M% Polycarboxylat (jeweils bezogen auf das Portlandzementklinkermehl). Der Wasserzementwert betrug jeweils 0,35.

Das Ergebnis zeigt die folgende Tafel 1:

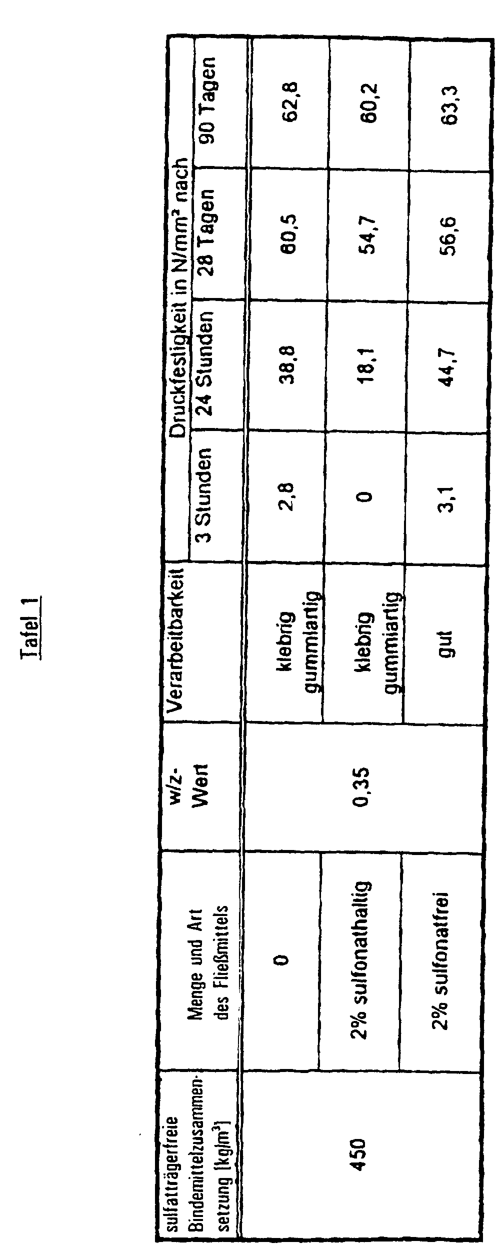

### Beispiel 2:

Bezüglich weiterer Möglichkeiten der Steuerung, z.B. der Biegezug- und Druckfestigkeiten durch Verwendung bestimmter Kornfraktionen und Kornbänder der Bindemittelzusammensetzung wurden Mörtel aus 450 g sulfatträgerfreiem Bindemittel (Zusammensetzung: 97,98 M% sulfatträgerfreies Portlandzementklinermehl der Feinheit < 24*µ*m, 0,52 M% Ligninsulfonat und 1,5 M% Natriumcarbonat) sowie 1350 g Normsand, 162 g Wasser und 2 M% Fließmittel in Form von Polycarboxylat (bezogen auf das Portlandzementklinkermehl) hergestellt.

Das Ergebnis enthält die Tafel 2:

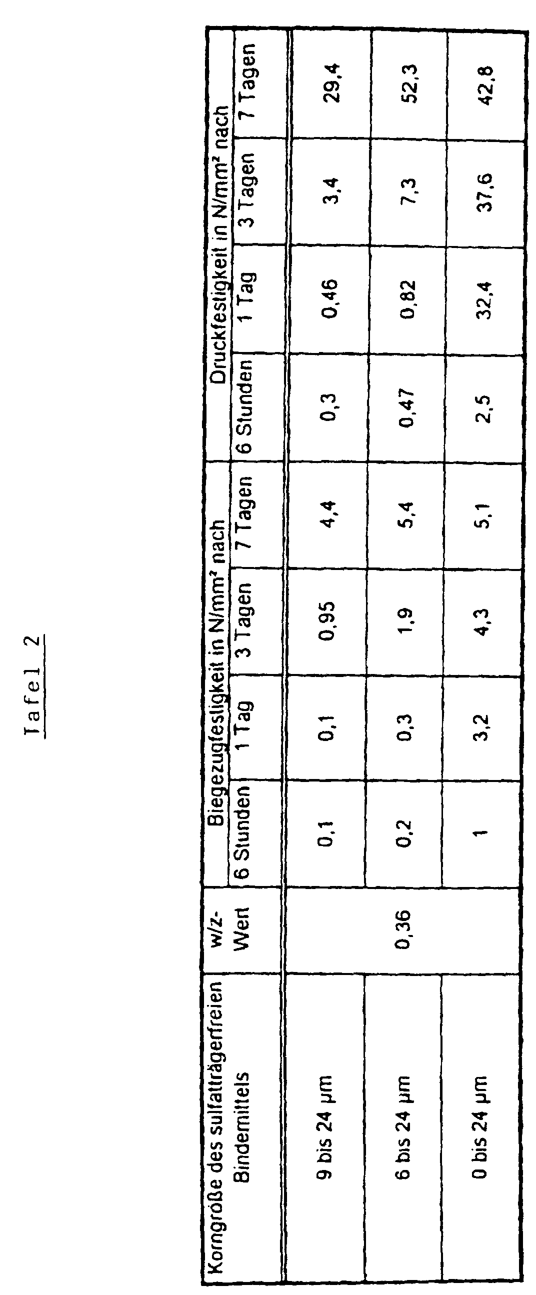

Aus den Ergebnissen ergibt sich, daß die Festigkeiten durch bestimmte Kornfraktionen steuerbar sind. Gleichermaßen steuerbar sind aber auch die Verarbeitbarkeit und Frühfestigkeit.
Diese Steuerbarkeiten über Kornfraktionen oder Kornbänder gelingen auch mit anderen, z.B. bekannten hydraulischen Bindemittelzusammensetzungen, so daß dieser Erfindungsgedanke über die Erfindung der Steuerung mittels sulfonatgruppenfreiem Fließmittel hinausgeht.

Besonders wirksam sind Zusatzmengen an sulfonatgruppenfreiem Fließmittel wie Polycarboxylat von 0,25 bis 3 M%, bezogen auf das hydraulische Bindemittelmehl, wobei die Zusatzmengen unter anderem auch auf die Feinheit des hydraulischen Bindemittelmehls abgestimmt werden. Je feiner das Bindemittelmehl umso mehr Fließmittel wird verwendet. Dabei werden Verzögererzusatzmengen vorzugsweise von 0,4 bis 4 M%, bezogen auf das hydraulische Bindemittelmehl, zugegeben, wobei beispielsweise, auf die Feinheit des Bindemittelmehls bezogen, Fließmittel und Verzögerer in folgenden Mengen verwendet werden:

| Bindemittelfeinheit | Fließmittel | Verzögerer |
|---|---|---|
| 0 - 24 µm | 0,25 - 0,6 M% | 0,4 - 0,7 M% |
| 0 - 16 µm | 0,5 - 1,2 M% | 0,5 - 1,0 M% |
| 0 - 9 µm | 1,0 - 1,9 M% | 0,9 - 2,0 M% |
| 0 - 6 µm | 1,8 - 3,0 M% | 1,8 - 4,0 M% |

Mit der Erfindung gelingt es, die klebrig gummiartige Konsistenz von frühfesten Betonmischungen zu vermeiden und den Erstarrungsbeginn, die Höhe der Frühfestigkeit z.B. nach 3 bis 6 Stunden sowie die Endfestigkeiten zu steuern durch die Verwendung der angegebenen Zusatzmittelkombination, deren Bestandteile mengenmäßig auf die gewünschten Eigenschaften genau und auf einfache Weise abgestellt werden können. Zudem ermöglicht die Zusatzmittelkombination eine weitere Steuerung über die Feinheit der Bindemittelkomponente, sofern letztere sulfatträgerfrei ist.

Die Erfindung sieht auch vor, in einer Bindemittelzusammenstzung mehr als ein sulfatträgerfreies Bindemittel und/oder mehr als einen sulfonatgruppenhaltigen Erstarrungsverzögerer und/oder mehr als einen Erhärtungsbeschleuniger und/oder mehr als ein sulfonatgruppenfreies Fließmittel zu verwenden.

## Patentansprüche

1. Hydraulische Bindemittelzusammensetzung im wesentlichen aufweisend
a) mindestens ein gemahlenes, sulfatträgerfreies hydraulisches Bindemittel,
b) mindestens einen sulfonatgruppenhaltigen, plastifizierenden Erstarrungsverzögerer,
c) mindestens einen Erhärtungsbeschleuniger,
d) mindestens ein sulfonatgruppenfreies Fließmittel, wobei als Fließmittel ein Polycarboxylat und/oder ein Polyacrylat und/oder ein Fließmittel aus der Gruppe der Polyasparaginsäuren enthalten ist.

2. Bindemittelzusammensetzung nach Anspruch 1,
**dadurch gekennzeichnet**, daß
das Polycarboxylat ein modifiziertes Polycarboxylat ist.

3. Bindemittelzusammensetzung nach Anspruch 1 und/oder 2,
**dadurch gekennzeichnet, daß**
das Fließmittel ein Homo- oder Copolymer carboxylgruppenhaltiger Monomerer ist, deren Seitenketten modifiziert sind.

4. Bindemittelzusammensetzung nach einem oder mehreren der Ansprüche 1 bis 3,
**dadurch gekennzeichnet, daß**
0,25 bis 3 M% Fließmittel enthalten sind.

5. Bindemittelzusammensetzung nach einem oder mehreren der Ansprüche 1 bis 4,
**dadurch gekennzeichnet, daß**
als Erstarrungsverzögerer ein Ligninsulfonat enthalten ist.

6. Bindemittelzusammensetzung nach einem oder mehreren der Ansprüche 1 bis 5,
**dadurch gekennzeichnet, daß** als Erstarrungsverzögerer mindestens eine Sulfonseife enthalten ist.

7. Bindemittelzusammensetzung nach einem oder mehreren der Ansprüche 1 bis 6,
**dadurch gekennzeichnet, daß**
als Erstarrungsverzögerer mindestens eine Sulfonsäure enthalten ist.

8. Bindemittelzusammensetzung nach einem oder mehreren der Ansprüche 1 bis 7,
**dadurch gekennzeichnet, daß**
als Erstarrungsverzögerer mindestens ein Alkylbenzolsulfonat enthalten ist.

9. Bindemittelzusammensetzung nach einem oder mehreren der Ansprüche 1 bis 8,
**dadurch gekennzeichnet, daß**
als Erstarrungsverzögerer mindestens ein Naphthalinsulfonat enthalten ist.

10. Bindemittelzusammensetzung nach einem oder mehreren der Ansprüche 1 bis 9,
**dadurch gekennzeichnet, daß**
als Erstarrungsverzögerer mindestens ein sulfoniertes Melaminformaldehydkondensat enthalten ist.

11. Bindemittelzusammensetzung nach einem oder mehreren der Ansprüche 5 bis 10,
**dadurch gekennzeichnet, daß**
die Erstarrungsverzögerer teilweise durch andere sulfonatgruppenfreie Verzögerer ersetzt enthalten sind.

12. Bindemittelzusammensetzung nach einem oder mehreren der der Ansprüche 5 bis 11,
**dadurch gekennzeichnet, daß**
Erstarrungsverzögerer in Mengen von 0,4 bis 4 M%, bezogen auf das Bindemittel, enthalten sind.

13. Bindemittelzusammensetzung nach einem oder mehreren der Ansprüche 1 bis 12,
**dadurch gekennzeichnet**, **daß**
als Erhärtungsbeschleuniger mindestens ein Alkalicarbonat enthalten ist.

14. Bindemittelzusammensetzung nach einem oder mehreren der Ansprüche 1 bis 13,
**dadurch gekennzeichnet, daß**
als Erhärtungsbeschleuniger mindestens ein Alkalibicarbonat enthalten ist.

15. Bindemittelzusammensetzung nach einem oder mehreren der Ansprüche 1 bis 14,
**dadurch gekennzeichnet, daß**
das hydraulische Bindemittel ein Portlandzementklinkermehl ist.

16. Bindemittelzusammensetzung nach einem oder mehreren der Ansprüche 1 bis 15,
**dadurch gekennzeichnet, daß**
das Bindemittel mit inerten, fein gemahlenen Gesteinsmehlen, z.B. Kalksteinmehl und/oder puzzolanischen Stoffen, beispielsweise Trass, Mikrosilika, Metakaolinit, Zeolithe unbehandelt oder getempert und/oder mit latent hydraulischen Stoffen, z.B. Hüttensandmehl und/oder mit anderen hydraulischen Stoffen, z.B. mit Calciumsilikaten und/oder Calciumaluminaten und/oder hydraulischen Kalken versetzt ist.

17. Bindemittelzusammensetzung nach einem oder mehreren der Ansprüche 1 bis 16,
**dadurch gekennzeichnet**, **daß**
das Bindemittel in Form einer bestimmten Kornfraktion enthalten ist.

18. Bindemittelzusammensetzung nach einem oder mehreren der Ansprüche 1 bis 17,
**dadurch gekennzeichnet**, **daß**
das Bindemittel ein Feinstbindemittel ist oder enthält und insbesondere in Form einer Kornfraktion vorliegt.

19. Bindemittelzusammensetzung nach Anspruch 18,
**dadurch gekennzeichnet, daß**
es eine Kornfraktion d₉₅ ≤ 6,5 *µ*m oder d₉₅ ≤ 9 *µ*m oder d₉₅ ≤ 16 *µ*m oder d₉₅ ≤ 24 *µ*m oder beliebige Mischungen selektierter Feinstmehle aufweist.

20. Bindemittelzusammensetzung nach einem oder mehreren der Ansprüche 1 bis 19,
**dadurch gekennzeichnet, daß**
sie als Werktrockenmischung die Zusatzmittelkombination enthaltend vorliegt.

21. Bindemittelzusammensetzung nach einem oder mehreren der Ansprüche 1 bis 19,
**dadurch gekennzeichnet, daß**
sie in mindestens zwei Gebinden vorliegt, wobei das eine Gebinde im wesentlichen das hydraulische Bindemittel und gegebenenfalls mindestens ein trockenes Zusatzmittel und das andere Gebinde mindestens ein trockenes oder flüssiges Zusatzmittel aufweist.

22. Verwendung einer Bindemittelzusammensetzung nach einem oder mehreren der Ansprüche 1 bis 21 zur Herstellung von Fließbeton mit Wasserbindemittelwerten von 0,3 bis 0,6, insbesondere von 0,35 bis 0,45.

23. Verwendung einer Bindemittelzusammensetzung nach einem oder mehreren der Ansprüche 1 bis 21 zur Herstellung eines fließfähigen Mörtels mit Wasserbindemittelwerten von 0,3 bis 0,6, insbesondere von 0,35 bis 0,45.

## Claims

1. Hydraulic binder composition essentially comprising
a) at least one ground, hydraulic binder which is free of sulphate carrier,
b) at least one plasticizing solidification retardant containing sulphonate groups,
c) at least one hardening accelerator,
d) at least one flow agent which is free from sulphonate groups, where the flow agent present is a polycarboxylate and/or a polyacrylate and/or a flow agent from the group consisting of the polyaspartic acids.

2. Binder composition according to Claim 1, characterized in that the polycarboxylate is a modified polycarboxylate.

3. Binder composition according to Claim 1 and/or 2, characterized in that the flow agent is a homopolymer or copolymer of monomers containing carboxyl groups whose side chains have been modified.

4. Binder composition according to one or more of Claims 1 to 3, characterized in that from 0.25 to 3 mol% of flow agent are present.

5. Binder composition according to one or more of Claims 1 to 4, characterized in that the solidification retardant present is a ligninsulphonate.

6. Binder composition according to one or more of Claims 1 to 5, characterized in that the solidification retardant present is at least one sulphone soap.

7. Binder composition according to one or more of Claims 1 to 6, characterized in that the solidification retardant present is at least one sulphonic acid.

8. Binder composition according to one or more of Claims 1 to 7, characterized in that the solidification retardant present is at least one alkylbenzenesulphonate.

9. Binder composition according to one or more of Claims 1 to 8, characterized in that the solidification retardant present is at least one naphthalenesulphonate.

10. Binder composition according to one or more of Claims 1 to 9, characterized in that the solidification retardant present is at least one sulphonated melamineformaldehyde condensate.

11. Binder composition according to one or more of Claims 5 to 10, characterized in that the solidification retardants have been partly replaced by other retardants which are free from sulphonate groups.

12. Binder composition according to one or more of Claims 5 to 11, characterized in that solidification retardants are present in amounts of from 0.4 to 4 mol%, based on the binder.

13. Binder composition according to one or more of Claims 1 to 12, characterized in that the hardening accelerator present is at least one alkali metal carbonate.

14. Binder composition according to one or more of Claims 1 to 13, characterized in that the hardening accelerator present is at least one alkali metal bicarbonate.

15. Binder composition according to one or more of Claims 1 to 14, characterized in that the hydraulic binder is a Portland cement clinker powder.

16. Binder composition according to one or more of Claims 1 to 15, characterized in that the binder has been mixed with inert, finely ground mineral powders, for example limestone powder and/or pozzolanic substances, for example trass, microsilica, metakaolinite, zeolites, untreated or heat-treated, and/or with latently hydraulic substances, for example foundry sand powder, and/or with other hydraulic substances, for example with calcium silicates and/or calcium aluminates and/or hydraulic limes.

17. Binder composition according to one or more of Claims 1 to 16, characterized in that the binder is present in the form of a certain grain fraction.

18. Binder composition according to one or more of Claims 1 to 17, characterized in that the binder is or comprises an extremely fine binder and is, in particular, in the form of a grain fraction.

19. Binder composition according to Claim 18, characterized in that it has a grain fraction d₉₅ ≤ 6.5 *µ*m or d₉₅ ≤ 9 *µ*m or d₉₅ ≤ 16 *µ*m or d₉₅ ≤ 24 *µ*m or any desired mixtures of selected extremely fine powders.

20. Binder composition according to one or more of Claims 1 to 19, characterized in that it comprises the additive combination in the form of a works dry mix.

21. Binder composition according to one or more of Claims 1 to 19, characterized in that it is present in at least two drums, where the first drum essentially contains the hydraulic binder and, if desired, at least one dry additive, and the other drum contains at least one dry or liquid additive.

22. Use of a binder composition according to one or more of Claims 1 to 21 for the production of flow concrete having water binder values of from 0.3 to 0.6, in particular from 0.35 to 0.45.

23. Use of a binder composition according to one or more of Claims 1 to 21 for the production of a flowable mortar having water binder values of from 0.3 to 0.6, in particular from 0.35 to 0.45.

## Revendications

1. Composition de liant hydraulique composée essentiellement de
a) au moins un liant hydraulique moulu exempt de véhicule sulfaté,
b) au moins un retardateur de solidification plastifiant contenant des groupes sulfonés,
c) au moins un accélérateur de prise,
d) au moins- un solvant exempt de groupes sulfonés, un polycarboxylate et/ou un polyacrylate et/ou un solvant du groupe des acides polyaspartiques étant présent comme solvant.

2. Composition de liant selon la revendication 1, caractérisée en ce que le polycarboxylate est un polycarboxylate modifié.

3. Composition de liant selon la revendication 1 ou 2, caractérisée en ce que le solvant est un homo- ou copolymère de monomères contenant des groupes carboxyle dont les chaînes latérales sont modifiées.

4. Composition de liant selon une ou plusieurs des revendications 1 à 3, caractérisée en ce qu'elle contient 0,25 à 3 % en masse de solvant.

5. Composition de liant selon une ou plusieurs des revendications 1 à 4, caractérisé en ce qu'elle contient un sulfonate de lignine comme retardateur de solidification.

6. Composition de liant selon ou plusieurs des revendications 1 à 5, caractérisée en ce qu'elle contient au moins un savon sulfonique comme retardateur de solidification.

7. Composition de liant selon une ou plusieurs des revendications 1 à 6, caractérisée en ce qu'elle contient au moins un acide sulfonique comme retardateur de solidification.

8. Composition de liant selon une ou plusieurs des revendications 1 à 7, caractérisée en ce qu'elle contient au moins un sulfonate de benzène d'alcyl comme retardateur de solidification.

9. Composition de liant selon une ou plusieurs des revendications 1 à 8, caractérisée en ce qu'elle contient au moins un sulfonate de naphtalène comme retardateur de solidification.

10. Composition de liant selon une ou plusieurs des revendications 1 à 9, caractérisée en ce qu'elle contient au moins un condensé de mélamine formique sulfoné comme retardateur de solidification.

11. Composition de liant selon une ou plusieurs des revendications 5 à 10, caractérisée en ce que le retardateur de solidification y est contenu partiellement substitué par d'autres retardateurs exempts de groupes sulfonés.

12. Composition de liant selon une ou plusieurs des revendications 5 à 11, caractérisée en ce que des retardateurs de solidification sont présents en pourcentages de masse de 0,4 à 4% par rapport au liant.

13. Composition de liant selon une ou plusieurs des revendications 1 à 12, caractérisée en ce qu'au moins un carbonate alcalin est présent comme accélérateur de prise.

14. Composition de liant selon une ou plusieurs des revendications 1 à 13, caractérisée en ce qu'au moins un bicarbonate alcalin est présent comme accélérateur de prise.

15. Composition de liant selon une ou plusieurs des revendications 1 à 14, caractérisée en ce que le liant hydraulique est de la farine de Klinker de ciment Portland.

16. Composition de liant selon une ou plusieurs des revendications 1 à 15, caractérisée en ce que le liant est mélangé avec des farines pierreuses inertes finement moulues, par exemple de la farine de roche calcaire et/ou des matières puzzolanes, par exemple du trasse, de micro-matériaux forts réfractaires, de la métakaolinite, des zéolithes non traités ou cuits et/ou des matériaux hydrauliques latents, par exemple de la farine de laitier et/ou d'autres matériaux hydrauliques, par exemple des silicates de calcium et/ou des aluminates de calcium et/ou des chaux hydrauliques.

17. Composition de liant hydraulique selon une ou plusieurs des revendications 1 à 16, caractérisée en ce que le liant est présent sous forme d'une fraction granulométrique prédéterminée.

18. Composition de liant selon une ou plusieurs des revendications 1 à 17, caractérisée en ce que le liant est ou contient un liant surfin et en particulier est sous forme d'une fraction granulométrique.

19. Composition de liant selon la revendication 18, caractérisée en ce qu'elle a une fraction granulométrique d₉₅ ≤ 6,5 µm ou d₉₅ ≤ 9 µm ou d₉₅ ≤ 16 µm ou d₉₅ ≤ 24 µm ou des mélanges quelconques de farines surfines sélectionnés.

20. Composition de liant selon une ou plusieurs des revendications 1 à 19, caractérisée en ce qu'elle est sous forme d'un mélange sec préfabriqué contenant la combinaison d'additifs.

21. Composition de liant selon une ou plusieurs des revendications 1 à 19, caractérisée qu'elle est sous forme d'au moins de deux emballages, un des emballages contenant essentiellement le liant hydraulique et le cas échéant au moins un additif sec et l'autre emballage contenant au moins un additif sec ou liquide.

22. Utilisation d'une composition de liant selon une ou plusieurs des revendications 1 à 21 pour fabriquer du béton fluidifié avec des valeurs de fixation d'eau de 0,3 à 0,6, en particulier 0,35 à 0,45.

23. Utilisation d'une composition de liant selon une ou plusieurs des revendications 1 à 21 pour fabriquer un mortier coulant avec des valeurs de fixation d'eau de 0,3 à 0,6, en particulier de 0,35 à 0,45.
